# EUROPÄISCHE PATENTSCHRIFT

(11) **EP 3 085 227 B1**
(45) Veröffentlichungstag und Bekanntmachung des Hinweises auf die Patenterteilung: **17.01.2018**
(21) Anmeldenummer: 16165242.5
(22) Anmeldetag: 14.04.2016
(51) Int. Cl.: A63B 22/02, A01K 15/02

(54) **BEWEGUNGSTRAINER FÜR KLEINTIERE**
MOVEMENT TRAINER FOR SMALL ANIMALS
ENTRAINEUR THERAPEUTIQUE POUR PETITS ANIMAUX

(30) Priorität: 24.04.2015 DE 102015106327
(43) Veröffentlichungstag der Anmeldung: 26.10.2016
(73) Patentinhaber: Thiele, Dirk, 63322 Rödermark (DE)
(72) Erfinder: Thiele, Dirk, 63322 Rödermark (DE)
(74) Vertreter: Keil & Schaafhausen Patent- und Rechtsanwälte PartGmbB

(56) Entgegenhaltungen:
- DE-U1- 29 618 942
- JP-A- 2007 151 894
- JP-A- 2010 035 455
- US-A- 5 100 127

## Beschreibung

Die Erfindung betrifft einen Bewegungstrainer für Kleintiere mit einem Wasserbecken und einem in dem Wasserbecken angeordneten Laufband, wobei das Wasserbecken eine umlaufende Seitenwand aufweist.

Bewegungstrainer werden für Trainings-, Therapie und Rekonvaleszenzzwecke verwendet, insbesondere zur Wiederherstellung oder Verbesserung der Funktionsfähigkeit der Gelenke und des gesamten Organismus. Sie dienen der Schmerzlinderung, dem Muskelaufbau oder der Vorbereitung von geplanten Operationen am Bewegungsapparat. Auch werden sie nach einer Operation zur Rehabilitation im Rahmen eines Physioprogramms eingesetzt. Bewegungstherapie auf einem Endloslaufband in einem Wasserbecken hat dabei besondere Vorteile. Durch den Auftrieb im Wasser ist das zu tragende Körpereigengewicht deutlich geringer. Es ist eine belastungsarme, schonende Bewegung sämtlicher Gelenke gewährleistet.

Es sind bereits Wassertherapiegeräte für Tiere bekannt, bei denen ein Laufband in einem Becken angeordnet ist. Die DE 20 2006 009 970 U1 beschreibt beispielsweise ein Wassertherapiegerät für ein Pferd. In dem Wasserbecken ist ein Laufband vorgesehen, dass das Tier zu körperlicher Bewegung zwingt. Die Bewegung erfolgt gegen den Widerstand des Wassers. Damit das Tier beabstandet von einer vorderen Schmalseitenwand gehalten wird, ist eine als Schwimmkörper ausgebildete Stange quer im Becken angeordnet. Diese Dressierstange stellt den gewünschten Abstand des Tieres zur Vorderwand ein. Die JP A 2010 035455 offenbart ein ähnliches Laufband für Hunde. Gerade im Kleintierbereich, was vor allem Hunde, aber auch Katzen betrifft, besteht ein verstärktes Interesse an Trainingsmöglichkeiten für das Tier im eigenen Haushalt, da die Fahrten zu professionellen Anlagen, wie sie bei einem Tierarzt zu finden sind, mit hohen Kosten verbunden sind. Problematisch bei den bekannten Bewegungstrainern ist aber nicht nur deren auf Großtiere ausgelegte Konstruktion. Für den Heimgebrauch sind diese in der Regel mit zu hohen Kosten verbunden und nicht transportabel. Bei der Übertragung bekannter Konzepte auf die Besonderheiten im Kleintierbereich zeigt sich eine unzureichende Bewegungsbegrenzung für das Tier. Es besteht immer die Gefahr, dass das Tier mit seinen Beinen an der Seitenwand anschlägt. Um die Bewegungsfreiheit des Tieres weiter einzuschränken, kann man das Tier durch eine Halsung oder dergleichen fixieren. Dies kann bei dem sich im Wasser befindlichen Tier jedoch zu Stressreaktionen führen.

Es ist daher Aufgabe der vorliegenden Erfindung, einen Bewegungstrainer für Kleintiere vorzuschlagen, der eine verbesserte Bewegungsbegrenzung bei gleichzeitig optimaler Bewegungsfreiheit für das Tier während des Trainings bietet.

Diese Aufgabe wird erfindungsgemäß dadurch gelöst, dass die Seitenwand entlang einer umlaufenden Fläche in das Innere des Wasserbeckens geneigt ist und eine Bewegungsbegrenzung für das Tier ausbildet, wobei der Freiraum innerhalb der Bewegungsbegrenzung kleiner ist als die Lauffläche des Laufbandes.

Durch die erfindungsgemäßen Merkmale erhält das Tier einen optimalen Freiraum unterhalb der Bewegungsbegrenzung, in dem es seine Extremitäten mit großem Freiheitsgrad bewegen kann. Die Bewegungsbegrenzung an der inneren Seitenwand ist nicht nur auf eine Seite des Tieres beschränkt, sondern umgibt das Tier vollständig, denn sie ist ebenfalls umlaufend ausgebildet und bildet eine geschlossene Bewegungsbegrenzung. Vorzugsweise erstreckt sich die Bewegungsbegrenzung entlang der inneren Seitenwand entlang durchgängig parallel zur Lauffläche. Dadurch, dass die umlaufende Seitenwand durchgängig eine Bewegungsbegrenzung ausbildet ist, ist unterhalb der Bewegungsbegrenzung ein vergrößerter Freiraum für das Tier vorhanden. Die zwischen der Bewegungsbegrenzung vorhandene Freifläche bzw. der Freiraum ist in einer Ebene parallel zu der Lauffläche kleiner als die Lauffläche des Laufbandes. Die Bewegungsbegrenzung bildet in einer Höhenrichtung senkrecht zur Lauffläche eine Einschnürung. Diese Einschnürung bildet eine optimale Bewegungsbegrenzung und vermeidet Panikreaktionen beim Tier, da dieses über ausreichenden Freiraum unterhalb der Einschnürung verfügt und nicht gegen die Seitenwände unterhalb der Bewegungsbegrenzung anstößt. Insbesondere für Hunde erweist sich der Bewegungstrainer als vorteilhaft, da sich gerade diese Tiere so platzieren lassen, dass die Einschnürung auf Brusthöhe verläuft. In vorteilhafter Weise lässt sich die Erfindung vor allem bei Hunden einsetzen, die nicht schwimmen, sondern gegen den Widerstand des Wassers arbeiten sollen. Idealerweise ist der Bewegungstrainer in verschiedenen Größen ausgebildet, entsprechend den möglichen Rückenlängen und dem Stockmaß der gängigsten Hunderassen.

Vorzugsweise erstreckt sich die Seitenwand von der Lauffläche entlang einer geraden Linie und geht dann in die Bewegungsbegrenzung über.

Die Lauffläche bzw. die zur Verfügung stehende Lauffläche definiert sich durch den Übergang der Seitenwände zum Laufband und kennzeichnet den nutzbaren Bereich des Laufbandes. Die Seitenwand kann sich aus mehreren Seitenwänden zusammensetzen, die sich zu einem Wasserbecken zusammenfügen.

Eine weitere Ausführungsform der Erfindung sieht vor, dass die Seitenwand entlang der umlaufenden Fläche bauchig in das Innere des Wasserbeckens gewölbt ist. Die bauchige bzw. ballige Auswölbung der Bewegungsbegrenzung offeriert dem Tier eine angenehme Abstützung an jeder Seite, was die Therapie zur unterstützen vermag. Das Wasserbecken ist demnach so gestaltet, dass es sich ausgehend von der Lauffläche in Richtung Beckenrand zunächst verjüngt und die Bewegungsbegrenzung ausbildet. Das Wasserbecken kann so gestaltet sein, dass es sich anschließend in Richtung Beckenrand wieder aufweitet. Da sich die Seitenwand in Richtung nach oben nach der Einschnürung wieder aufweitet, erhält das Tier entsprechenden Raum, um seinen Kopf zu bewegen was den Komfort für das Tier verbessert.

Die Einschnürung bzw. Bewegungsbegrenzung kann eine innere Fläche ausbilde, die senkrecht zur Laufläche verläuft. Diese bieten dem Tier eine angenehme Abstützung.

Nach einer weiteren Ausführungsform der Erfindung ist vorgesehen, dass die Ränder der Lauffläche in der Höhenrichtung (senkrecht zur Lauffläche) betrachtet jeweils außerhalb des inneren Randes der Bewegungsbegrenzung liegen. Durch diese Maßnahme ist sichergestellt, dass dem Tier in jede Richtung optimale Bewegungsfreiheit geboten wird. Dadurch werden Verletzungen vermieden. Zudem wird so die zentrale Position des Tieres sichergestellt.

Gemäß einer weiteren vorteilhaften Ausführungsform ist vorgesehen, dass gegenüberliegende Abschnitte der Seitenwand bzw. der Seitenwände, die die umlaufende Seitenwand bilden, sich ausgehend von der Lauffläche in einem Winkel von 15°- 25° zueinander erstrecken und im Bereich der Einschnürung im Wesentlichen parallel verlaufen. Generell kann die Einschnürung ein sich in Höhenrichtung erstreckender Abschnitt mit parallelen Seitenwänden sein. Diese Ausgestaltung der Einschnürung bietet dem Tier optimale Abstützpunkte, so dass Druckstellen oder Verletzungen vermieden werden. An der Einschnürung schließt idealerweise ein Abschnitt ab, der sich in Höhenrichtung nach oben hin, also zum Beckenrand hin, wieder erweitert.

Erfindungsgemäß ist vorgesehen, dass Laufband elektrisch antreibbar ist bzw. einen elektrischen Antrieb aufweist.

Eine weitere Ausführungsform der Erfindung sieht vor, dass die Geschwindigkeit des Laufbandes stufenlos variierbar ist, was den Trainingseffekt verbessert.

Um das Befüllen und Entleeren des Wasserbeckens zu vereinfachen, sieht eine weitere Ausführungsform der Erfindung vor, dass der Bewegungstrainer einen vorzugsweise verschließbaren Wasserablass im Bodenbereich aufweist. Ebenso kann in einem oberen Bereich oder einem unteren Bereich ein vorzugsweise verschließbarer Wassereinlass vorgesehen sein. Beide Einlässe sind mit Schläuchen verbindbar.

Gemäß einer weiteren Ausführungsform der Erfindung ist vorgesehen, dass die Neigung der Lauffläche und/oder des Laufbandes verstellbar ist. Dies kann beispielsweise durch höhenverstellbare Füße realisiert werden, die auf der Unterseite des Bewegungstrainers angeordnet und beispielsweise dort verschraubt sind.

Eine weitere Ausführungsform der Erfindung sieht Mittel zur Fixierung und/oder zur Entlastung des Tieres im Wasserbecken vor. In diesem Falle kann insbesondere eine Bauchschlinge, die auf gegenüberliegenden Seiten des Wasserbeckens befestigbar ist, dazu dienen, den Bauchbereich des Tieres abzustützen.

Zwecks Verbesserung des Trainingeffekts sieht eine weitere Ausführungsform der Erfindung eine Pumpe sowie wenigstens eine Düse vor, welche in dem Wasserbecken entgegen der Laufrichtung ausgerichtet ist, wobei die Pumpe dazu eingerichtet ist, das Wasser aus dem Wasserbecken durch die wenigstens eine Düse zu pumpen. Diese Maßnahme bietet eine Gegenstromanlage, bei der die Düse das Wasser entgegen der Bewegungsrichtung des Tieres pumpt.

Düsen lassen sich auch zum Zwecke der Massage verwenden. Eine weitere Ausführungsform sieht daher eine Pumpe und Düsen vor, die quer und/oder in Laufrichtung ausgerichtet sind, wobei die Pumpe dazu eingerichtet ist, das Wasser aus dem Wasserbecken durch die Düsen zu pumpen. Die als Massagedüsen wirkenden Düsen können in Kombination mit der Gegenstromanlage betrieben werden. Eine Pumpe kann dabei sowohl für die Düsen der Gegenstromanalage wie auch für die Massagedüsen verwendet werden.

Gemäß einer weiteren Ausführungsform der Erfindung ist eine Heizung vorgesehen, um das Wasser zu erwärmen. Zu diesem Zwecke können eine Pumpe sowie ein Durchlauferhitzer vorgesehen sein. Besagte Pumpe bzw. besagter Durchlauferhitzer können mit der Wassergegenstromanlage bzw. mit den Wassermassagedüsen kombiniert werden, so dass erwärmtes Wasser unmittelbar auf das Tier trifft.

Gemäß einer weiteren Ausführungsform der Erfindung ist vorgesehen, dass das Wasserbecken wannenartig ausgebildet und in einer manuell transportierbaren Außenwanne aufgenommen ist. Die Außenwanne kann insbesondere Transportgriffe oder dergleichen aufweisen, was die leichtere Handhabung ermöglicht. Vorzugsweise ist die Wanne aus Kunststoff und damit aus einem leichten Material, was den Bewegungstrainer für den Heimbedarf besonders geeignet macht.

Gerade im Bereich der Heimanwendungen herrscht eine Bedürfnis für Trainingsgeräte für die Haustieren, sei es zu Wellnesszwecken, für eine bessere körperliche Auslastung des Tieres oder für Rehabilitationsmaßnahmen, wenn z.B. ein Hund seinen Bewegungsapparat lange Zeit schonen musste. In der Heimanwendung ist das Wasserbecken lediglich mit Leitungswasser zu befüllen. Der Anwender kann dieses variabel in Bezug auf Temperatur und Höhe bestimmen, beispielsweise bis zur Brusthöhe des eigenen Hundes. Durch das Training spart sich der Kleintierbesitzer aufwendige Fahrten zum Tierarzt. Eine transportable Trainingsvorrichtung erweist sich hierbei als besonders vorteilhaft und bietet ein hohes Maß an Flexibilität.

Eine weitere Ausführungsform der Erfindung sieht Sensoren vor, die dazu eingerichtet sind, Druck und/oder Position des Tritts des Tieres auf der Lauffläche zu erfassen. Ferner sind Mittel vorgesehen, um die Sensordaten an eine Datenverarbeitungseinrichtung zu leiten.

Die Sensoren können insbesondere unter der Lauffläche vorgesehen sein. Über die unter der Lauffläche verteilten Sensoren lässt sich eine Schrittfelderkennung bzw. eine Schrittmustererkennung durchführen, was Aufschluss über den Zustand des Bewegungsapparates des Tieres gibt. Zudem lässt sich beispielsweise der Druck einer Hundepfote ermitteln, wodurch man Informationen erhält, wenn das Tier starke Belastungen vermeidet, beispielsweise hinkt. Der Bewegungstrainer weist entsprechende Leitungen, Anschlüsse oder sonstige Mittel auf, um die Sensordaten an die Datenverarbeitungseinrichtung, beispielsweise einen Computer, einen Laptop, einen Tablet oder eine sonstige geeignete Einrichtung zu leiten. Selbstverständlich kann die Datenverarbeitungseinrichtung - idealerweise gepaart mit einer Anzeigevorrichtung, wie einem Monitor oder dergleichen - an dem Bewegungstrainer vorgesehen sein.

Gemäß einer weiteren Ausführungsform der Erfindung weist der Bewegungstrainer Mittel zur Wasserniveauregulierung vor. Diese können mechanisch aber auch elektrisch realisiert werden. Bei einer mechanischen Wasserniveauregulierung kann ein Schwimmer oder dergleichen vorgesehen sein, der bei einem bestimmten Wasserniveau, die Wasserzufuhr automatisch ausschaltet, beispielsweise indem der Schwimmer ein Ventil betätigt. Bei einer elektrischen Wasserniveau-Regulierung besteht die Möglichkeit, verschiedene speicherbare Niveaus zu integrieren. Hierzu kann ein Schwimmer oder ein sonstiger Sensor dienen, der den Ist-Wert des Wasserniveaus mit einem einprogrammierten SollWert vergleicht und einen entsprechenden Regler betätigt, der ein Ventil schaltet, um das Wasserniveau auf einem Soll-Niveau zu halten.

Weitere Merkmale, Vorteile und Anwendungsmöglichkeiten der Erfindung ergeben sich auch aus der nachfolgenden Beschreibung von Ausführungsbeispielen und den Zeichnungen. Dabei bilden alle beschrieben und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigen:
- Fig. 1: in perspektivischer Ansicht einen Bewegungstrainer nach einer ersten Ausführungsform der Erfindung;
- Fig. 2: den Bewegungstrainer aus Fig. 1 in einer Schnittansicht entlang der Linie A-A;
- Fig. 3: den Bewegungstrainer aus Fig. 1 in einer Schnittansicht entlang der Linie B-B;
- Fig. 4: den Bewegungstrainer aus Fig. 1 in einer Draufsicht; und
- Fig. 5: einen Bewegungstrainer nach einer weiteren Ausführungsform der Erfindung in perspektivischer Schnittansicht.

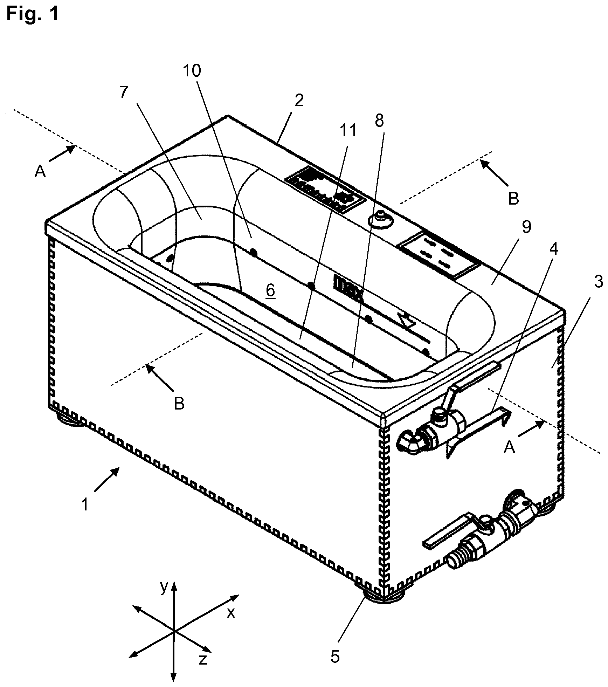

Die Fig. 1 zeigt einen Bewegungstrainer 1 für Kleintiere, insbesondere Hunde. Der Bewegungstrainer umfasst ein wannenartiges Wasserbecken 2, das in eine Außenwanne 3 eingesetzt ist. Die Außenwanne 3 ist kastenförmig aufgebaut und besitzt auf gegenüberliegenden Seiten Traggriffe 4 zum einfachen Transport des Bewegungstrainers 1. An der Unterseite der Außenwanne 3 weist der Bewegungstrainer 1 im Bereich der Ecken Füße 5 auf. Die Füße 5 sind höhenverstellbar, wobei sich der Abstand der Füße 5 zur Außenwanne 3 einstellen lässt.

Das Wasserbecken 2 weist einen inneren Beckenabschnitt 6 auf, der zur Aufnahme des Wassers dient. Der Beckenabschnitt 6 wird definiert durch eine umlaufende Seitenwand 7 des Wasserbeckens. Die umlaufende Seitenwand 7 erstreckt sich von einem Bodenbereich, in dem ein Endloslaufband 8 angeordnet ist, bis zu einem oberen Rand 9 (Wasserbeckenrand), der im Wesentlichen flach ausgebildet ist. In einem oberen Abschnitt der Seitenwand 7 ist eine Bewegungsbegrenzung 10 ausgebildet. In Höhenrichtung (Y-Richtung) grenzt die Seitenwand 7 an das Endloslaufband 8. Diese Grenze definiert ein zur Verfügung gestellte Lauffläche 11 auf dem Laufband 8. In Höhenrichtung (Y-Richtung) erstreckt sich die Seitenwand 7 nach oben bis zum oberen Rand 9. Die Seitenwand 7 ist in einer Richtung um die Höhenachse Y entlang einer umlaufenden Fläche von der Lauffläche 11 ausgehend in das Innere 6 des Wasserbeckens 3 geneigt und bildet die Bewegungsbegrenzung 10 aus. Dabei ist die Seitenwand 7 in das Innere des Wasserbeckens bzw. in den Beckenabschnitt 6 hinein bauchig ausgebildet und entsprechend gewölbt. Im mittleren Bereich bildet sich so eine Einschnürung. Ausgehend vom Bodenbereich verjüngt sich somit die Wanne und wird enger bis zur Einschnürung (Bewegungsbegrenzung). Im Anschluss an die Einschnürung erweitert sich die Seitenwand 7 und bildet in Höhenrichtung (Y-Richtung) einen sich nach außen erweiternden Abschnitt aus, der in den Beckenrand 9 übergeht.

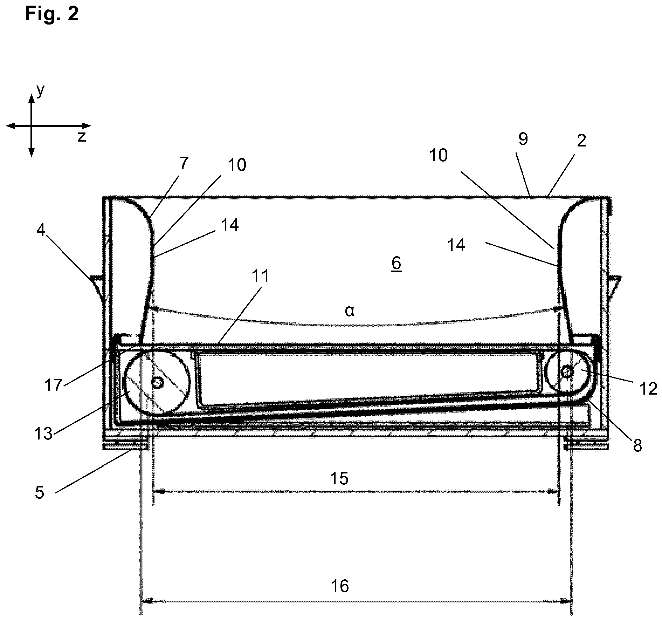

Fig. 2 zeigt die Schnittansicht A-A des Bewegungstrainers aus Fig. 1. Unterhalb des Beckenabschnitts 6 des Wasserbeckens 2 ist die Mechanik für das Laufband 8 angeordnet. In dem Bodenabschnitt der Vorrichtung ist eine kastenförmige Abstützung für das Laufband angeordnet. Der Antrieb umfasst ein Spannrad 12 sowie ein Antriebsrad 13, über welche das Laufband 8 läuft. Über einen nicht dargestellten Motor wird das Antriebsrad 13 angetrieben. Die Drehzahl des Antriebrads 13 ist stufenlos einstellbar. Durch Verstellen der Füße 5 lässt sich die Neigung des Laufbandes 8 bzw. der Lauffläche 11 variieren, so dass unterschiedliche Steigungen eingestellt werden können.

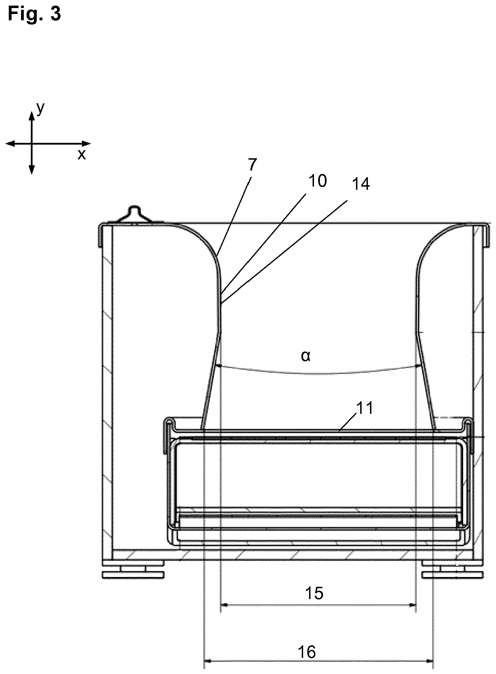

Im Wesentlichen umfasst der Bewegungstrainer 1 vier innere Seitenwände, nämlich zwei längere seitliche Seitenwände sowie zwei gegenüberliegende kürzere Seitenwände, die entsprechend die vordere bzw. die hintere Seitenwand ausbilden. Wie die Fig. 2 zeigt, sind gegenüberliegende Seitenwände bzw. gegenüberliegende Abschnitte der Seitenwand 7 so ausgestaltet, dass sie sich ausgehend von der Lauffläche 11 in einem Winkel von α = 20° zueinander nach oben erstrecken. Anschließend gehen die Seitenwände in die Bewegungsbegrenzung 10 über, wo sie im Wesentlichen parallel verlaufen, bis sie im oberen Bereich kurvenartig nach außen auslaufen. Der innere Rand 14 der Bewegungsbegrenzung 10 definiert in einer Ebene parallel zur Lauffläche 11 den zur Verfügung stehenden Freiraum. Der Abschnitt 15 zwischen gegenüberliegenden inneren Rändern der Einschnürung ist kleiner als der Abstand 16 der Ränder 17 der Lauffläche 11. Wie die Fig. 3 zeigt, ist das auch in dem Schnitt B-B der Fall. Auch hier erstrecken sich die Seitenwandabschnitte ausgehend vom Bodenbereich in einem Winkel von α = 20° zueinander nach oben und gehen dann in die Einschnürung bzw. die Bewegungsbegrenzung 10 über, die sich ebenfalls über eine gewisse Strecke in Y-Richtung vertikal nach oben erstreckt, wobei die Seitenwände 7 abschließend kurvenartig nach oben auslaufen. Der Abstand 15 zwischen den inneren Rändern 14 gegenüberliegender Seitenwandabschnitte ist auch hier geringer als der Abstand 16 der Laufflächenbegrenzung an den Rändern 17 im Boden. Damit schließen an die Bewegungsbegrenzung 10 sowohl nach oben als auch nach unten sich nach außen erweiternde Abschnitte an.

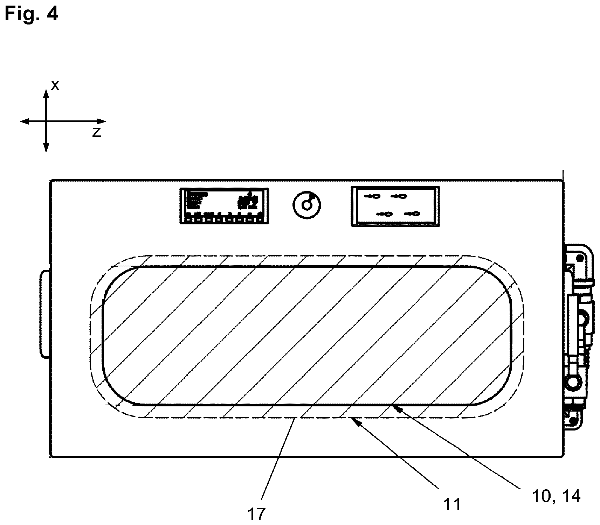

Die besondere Ausgestaltung der Bewegungsbegrenzung 10 zeigt die Fig. 4. Eingezeichnet mit Strichlinien ist die zur Verfügung stehende Lauffläche 11 wie auch der innere Rand 14 der Bewegungsbegrenzung 10. Zu erkennen ist, dass die Fläche der Lauffläche 11 größer ist als die Fläche des zur Verfügung stehenden Freiraums innerhalb der Bewegungsbegrenzung 10. Dadurch hat das Tier optimale Bewegungsmöglichkeiten in alle Richtungen, ist aber gleichzeitig in seiner Bewegungsfreiheit begrenzt. Die Ränder der Lauffläche 10 liegen von oben betrachtet außerhalb des inneren Rands 14 der Bewegungsbegrenzung 10.

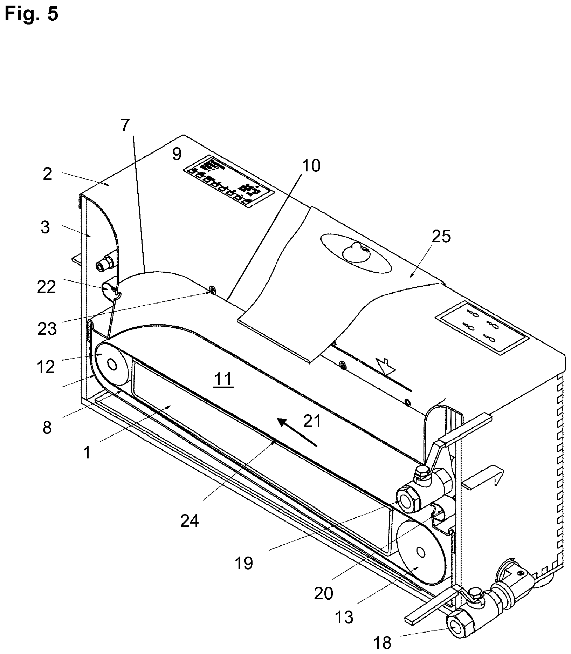

Die Fig. 5 zeigt einen Bewegungstrainer 1 nach einer weiteren Ausführungsform, der eine Reihe von zusätzlichen Optionen verwirklicht, die die Leistungsfähigkeit des Bewegungstrainer 1 verbessern. Diese Ausführungsform besitzt einen Ablasshahn 18, der mit dem Beckenabschnitt 6 in Verbindung steht.

Ebenso ist ein Zulaufhahn 19 vorgesehen, über den Wasser in den Bewegungstrainer 1 eingeführt werden kann. Ein optionaler Ansaugfilter 20 schützt dabei die wesentlichen Funktionen des Bewegungstrainers 1. Entgegen der Laufrichtung 21 des Tieres (die Lauffläche 11 bewegt sich unter dem Tier in entgegengesetzter Richtung) sind Gegenstromdüsen 22 in der Seitenwand 7 angeordnet. Die Gegenstromdüsen 22 stehen mit einer nicht dargestellten Pumpe in Fluidverbindung, wobei die Pumpe Wasser aus dem Beckenabschnitt 6 zu den Düsen 22 pumpt. In gleicher Weise steht besagte Pumpe in Verbindung mit Massagedüsen 23, die in seitlichen Abschnitten der Seitenwand 7 vorgesehen sind.

Unterhalb der Lauffläche 11 sind Sensoren 24 verteilt, die den Druck der Schritte des Tieres beim Gehen messen. Die Sensoren sind so verteilt, dass ein Bewegungsmuster registrierbar ist und durch eine Datenverarbeitungseinrichtung ausgewertet werden kann.

An dem oberen Bereich des oberen Rands 9 ist eine Bauchschlinge 25 abnehmbar festgelegt. Diese Bauchschlinge kann unter dem Bauch des jeweiligen Tieres gelegt werden, dass dadurch in der Höhenrichtung abgestützt wird. Dadurch wird der Therapieeffekt unterstützt.

### Bezugszeichenliste

- 1: Bewegungstrainer
- 2: Wasserbecken
- 3: Außenwanne
- 4: Traggriff
- 5: Fuß
- 6: Beckenabschnitt
- 7: Seitenwand
- 8: Endloslaufband
- 9: oberen Rand (Beckenrand)
- 10: Bewegungsbegrenzung (Einschnürung)
- 11: Lauffläche
- 12: Spannrad
- 13: Antriebsrad
- 14: innerer Rand
- 15: Abstand
- 16: Abstand
- 17: Rand der Laufläche
- 18: Ablasshahn
- 19: Zulaufhahn
- 20: Ansaugfilter
- 21: Laufrichtung
- 22: Gegenstromdüse
- 23: Massagedüse
- 24: Drucksensoren
- 25: Bauchschlinge

## Patentansprüche

1. Bewegungstrainer (1) für Kleintiere mit einem Wasserbecken (2) und einem in dem Wasserbecken (2) angeordneten Laufband (8), wobei das Wasserbecken (2) eine umlaufende Seitenwand (7) aufweist, **dadurch gekennzeichnet,**
**dass** die Seitenwand (7) entlang einer umlaufenden Fläche in das Innere (6) des Wasserbeckens (3) geneigt ist und eine Bewegungsbegrenzung (10) für das Tier ausbildet, wobei der Freiraum innerhalb der Bewegungsbegrenzung (10) kleiner ist als die Lauffläche (11) des Laufbandes (8).

2. Bewegungstrainer nach Anspruch 1, **dadurch gekennzeichnet, dass** die Seitenwand (7) bauchig in das Innere (6) des Wasserbeckens (3) gewölbt ist.

3. Bewegungstrainer nach Anspruch 1 oder 2, **dadurch gekennzeichnet, dass** die Bewegungsbegrenzung (10) eine senkrecht zur Lauffläche (11) verlaufende Fläche ausbildet.

4. Bewegungstrainer nach einem der vorhergehenden Ansprüche, **dadurch gekennzeichnet, dass** die Ränder (17) der Lauffläche (8) außerhalb des inneren Rands (14) der Bewegungsbegrenzung (10) liegen.

5. Bewegungstrainer nach einem der vorhergehenden Ansprüche, **dadurch gekennzeichnet, dass** gegenüberliegende Abschnitte der Seitenwand (7) sich ausgehend von der Lauffläche (11) in einem Winkel von 15 bis 25° zueinander erstecken und im Bereich der Bewegungsbegrenzung (10) im Wesentlichen parallel verlaufen.

6. Bewegungstrainer nach einem der vorhergehenden Ansprüche, **dadurch gekennzeichnet, dass** sich das Wasserbecken (2) in Höhenrichtung ausgehend von der Bewegungsbegrenzung zu einem Beckenrand (9) hin aufweitet.

7. Bewegungstrainer nach einem der vorhergehenden Ansprüche, **dadurch gekennzeichnet, dass** die Neigung der Lauffläche (11) verstellbar ist.

8. Bewegungstrainer nach einem der vorhergehenden Ansprüche, **gekennzeichnet durch** eine Pumpe und wenigstens eine Düse (22), die entgegen der Laufrichtung (21) ausgerichtet ist, wobei die Pumpe dazu eingerichtet ist, das Wasser aus dem Wasserbecken (2) durch die Düse (22) zu pumpen.

9. Bewegungstrainer nach einem der vorhergehenden Ansprüche, **gekennzeichnet durch** eine Pumpe und Düsen (23), die quer und/oder in Laufrichtung (21) ausgerichtet sind, wobei die Pumpe dazu eingerichtet ist, dass Wasser aus dem Wasserbecken (2) durch die Düsen (23) zu pumpen.

10. Bewegungstrainer nach einem der vorhergehenden Ansprüche, **gekennzeichnet durch** einen Durchlauferhitzer oder andere Mittel zum Erwärmen des Wassers.

11. Bewegungstrainer nach einem der vorhergehenden Ansprüche, **dadurch gekennzeichnet, dass** das Wasserbecken (2) wannenartig ausgebildet ist und in einer manuell transportierbaren Außenwanne (3) aufgenommen ist, die Transportgriffe (4) aufweist.

12. Bewegungstrainer nach einem der vorhergehenden Ansprüche, **dadurch gekennzeichnet, dass** Sensoren (24) vorgesehen sind, die dazu eingerichtet sind, Druck und/oder Position des Tritts auf der Lauffläche (11) zu erfassen, und dass Mittel vorgesehen sind, um die Sensordaten an eine Datenverarbeitungseinrichtung zu leiten.

13. Bewegungstrainer nach einem der vorhergehenden Ansprüche, **dadurch gekennzeichnet, dass** Mittel zur Wasserniveauregulierung vorgesehen sind.

## Claims

1. A movement trainer (1) for small animals, having a water basin (2) and a treadmill (8) arranged in the water basin (2), the water basin (2) having a peripheral side wall (7),
**characterised in that**
the side wall (7) slopes into the interior (6) of the water basin (3) along a peripheral face and forms a movement limit (10) for the animal, wherein the free space within the movement limit (10) is smaller than the running surface (11) of the treadmill (8).

2. The movement trainer according to Claim 1,
**characterised in that**
the side wall (7) bulges into the interior (6) of the water basin (3).

3. The movement trainer according to Claim 1 or 2,
**characterised in that**
the movement limit (10) forms a face running perpendicularly to the running surface (11).

4. The movement trainer according to any one of the preceding claims,
**characterised in that**
the edges (17) of the running surface (8) lie outside the inner edge (14) of the movement limit (10).

5. The movement trainer according to any one of the preceding claims,
**characterised in that**
opposing sections of the side wall (7) extend at an angle of 15 to 25° to each other, starting from the running surface (11), and run substantially parallel in the region of the movement limit (10).

6. The movement trainer according to any one of the preceding claims,
**characterised in that**
the water basin (2) widens in the vertical direction, from the movement limit to a basin edge (9).

7. The movement trainer according to any one of the preceding claims,
**characterised in that**
the inclination of the running surface (11) is adjustable.

8. The movement trainer according to any one of the preceding claims,
**characterised by**
a pump and at least one jet (22), which is oriented counter to the running direction (21), wherein the pump is designed to pump the water out of the water basin (2) through the jet (22).

9. The movement trainer according to any one of the preceding claims,
**characterised by**
a pump and jets (23), which are oriented transversely to and/or in the running direction (21), wherein the pump is designed to pump the water out of the water basin (2) through the jets (23).

10. The movement trainer according to any one of the preceding claims,
**characterised by**
an instantaneous water heater or other means for heating the water.

11. The movement trainer according to any one of the preceding claims,
**characterised in that**
the water basin (2) is tub-like and is accommodated in a manually portable outer tub (3), which has carry-handles (4).

12. The movement trainer according to any one of the preceding claims,
**characterised in that**
sensors (24) are provided, which are designed to sense the pressure and/or the position of the step on the running surface (11), and that means are provided to transmit the sensor data to a data processing device.

13. The movement trainer according to any one of the preceding claims,
**characterised in that**
means are provided for regulating the water level.

## Revendications

1. Entraîneur thérapeutique (1) pour petits animaux, avec un bassin (2) et un tapis roulant (8) placé dans le bassin (2), le bassin (2) comportant une paroi latérale (7) périphérique, **caractérisé**
**en ce que** le long d'une surface périphérique, la paroi latérale (7) est inclinée vers l'intérieur (6) du bassin (3) et créé une limitation de mouvement (10) pour l'animal, l'espace libre à l'intérieur de la limitation de mouvement (10) étant plus petit que la surface de roulement (11) du tapis roulant (8).

2. Entraîneur thérapeutique selon la revendication 1, **caractérisé en ce que** la paroi latérale (7) est bombée vers l'intérieur (6) du bassin (3).

3. Entraîneur thérapeutique selon la revendication 1 ou 2, **caractérisé en ce que** la limitation de mouvement (10) forme une surface s'écoulant à la perpendiculaire de la surface de roulement (11).

4. Entraîneur thérapeutique selon l'une quelconque des revendications précédentes, **caractérisé en ce que** les bords (17) de la surface de roulement (8) se situent à l'extérieur du bord intérieur (14) de la limitation de mouvement (10).

5. Entraîneur thérapeutique selon l'une quelconque des revendications précédentes, **caractérisé en ce que** des parties en vis-à-vis de la paroi latérale (7) s'étendent à partir de la surface de roulement (11) sous un angle de 15 à 25° l'une par rapport à l'autre et dans la région de la limitation de mouvement (10), s'écoulent sensiblement à la parallèle.

6. Entraîneur thérapeutique selon l'une quelconque des revendications précédentes, **caractérisé en ce qu'**en partant dans la direction de la hauteur, le bassin (2) s'évase de la limitation de mouvement vers un bord de bassin (9).

7. Entraîneur thérapeutique selon l'une quelconque des revendications précédentes, **caractérisé en ce que** l'inclinaison de la surface de roulement (11) est réglable.

8. Entraîneur thérapeutique selon l'une quelconque des revendications précédentes, **caractérisé par** une pompe et au moins une buse (22), qui est orientée à l'encontre de la direction de déplacement (21), la pompe étant aménagée pour pomper l'eau hors du bassin (2) à travers la buse (22).

9. Entraîneur thérapeutique selon l'une quelconque des revendications précédentes, **caractérisé par** une pompe et des buses (23), qui sont orientées à la transversale et/ou dans la direction de déplacement (21), la pompe étant aménagée pour pomper l'eau du bassin (2) à travers les buses (23).

10. Entraîneur thérapeutique selon l'une quelconque des revendications précédentes, **caractérisé par** un chauffe-eau instantané ou d'autres moyens destinés à chauffer l'eau.

11. Entraîneur thérapeutique selon l'une quelconque des revendications précédentes, **caractérisé en ce que** le bassin (2) est conçu sous la forme d'une cuve et est réceptionné dans une cuve extérieure (3) manuellement transportable, qui comporte des poignées de transport (4).

12. Entraîneur thérapeutique selon l'une quelconque des revendications précédentes, **caractérisé en ce que** des capteurs (24) sont prévus qui sont aménagés pour détecter la pression et/ou la position de la marche sur la surface de roulement (11) et **en ce que** des moyens sont prévus pour conduire les données des capteurs à un système de traitement des données.

13. Entraîneur thérapeutique selon l'une quelconque des revendications précédentes, **caractérisé en ce que** des moyens sont prévus pour réguler le niveau d'eau.
